# FASCICULE DE BREVET EUROPEEN

(11) **EP 0 549 399 B1**
(45) Date de publication et mention de la délivrance du brevet: **20.05.1998**
(21) Numéro de dépôt: 92403371.5
(22) Date de dépôt: 11.12.1992
(51) Int. Cl.: G06F 9/46

(54) **Dispositif de synchronisation entre plusieurs processeurs indépendants**
Synchronisierungseinrichtung zwischen mehreren unabhängigen Prozessoren
Synchronisation device between several independant processors

(30) Priorité: 23.12.1991 FR 9116156
(43) Date de publication de la demande: 30.06.1993
(73) Titulaire: SEXTANT AVIONIQUE, 92366 Meudon la Forêt Cédex (FR)
(72) Inventeur: Bastardie, Hervé, F-78800 Houilles (FR); Stephan, Pascal, F-92130 Issy les Moulineaux (FR)
(74) Mandataire: de Saint-Palais, Arnaud Marie

(56) Documents cités:
- EP-A- 67 294
- EP-A- 316 087
- EP-A- 388 052

## Description

La présente invention concerne un dispositif de synchronisation entre plusieurs processeurs indépendants, par exemple en vue de permettre l'établissement de rendez-vous cycliques entre ces processeurs tout en garantissant une totale ségrégation ainsi que leur autonomie respective.

Elle s'applique plus particulièrement à des processeurs produisant des données cycliques et permet de synchroniser les processeurs au niveau de leurs cycles temps réel et non de leurs cycles élémentaires de calcul.

On rappelle à ce sujet que, d'une façon générale, l'enchaînement des instructions exécutées par un processeur est cadencé par une horloge interne dite horloge processeur.

Cette horloge interne définit des cycles élémentaires au cours de chacun desquels le processeur exécute une instruction.

Pour effectuer des traitements en temps réel, le processeur doit exécuter un ensemble d'instructions au cours d'une période fixée. La période ainsi allouée à un ensemble de traitement est appelée cycle temps réel. Elle est délimitée par des impulsions d'horloge (tops) en provenance d'une horloge temps réel. Les traitements du processeur sont ainsi synchronisés par rapport au temps "réel".

Pour synchroniser les traitements de plusieurs processeurs, plusieurs techniques sont utilisables.

Une première solution consiste à utiliser une même horloge à quartz pour tous les processeurs de manière à obtenir des cycles élémentaires identiques pour tous les processeurs.

L'inconvénient de cette solution consiste en ce qu'elle impose l'utilisation de processeurs identiques fonctionnant à la même fréquence.

Une seconde solution consiste à utiliser autant d'horloges processeur qu'il y a de processeurs mais une même horloge temps réel pour tous les processeurs. L'inconvénient de cette solution consiste en ce qu'elle ne permet pas de détecter une défaillance de l'horloge temps réel. Or, une défaillance de celle-ci entraîne une défaillance simultanée de tous les processeurs. L'objectif de sécurité n'est donc pas rempli.

Une troisième solution consiste à utiliser au moins deux horloges temps réel pour des processeurs comprenant chacune sa propre horloge processeur, et un dispositif de surveillance qui vérifie l'écart entre les deux horloges temps réel.

Si cet écart est incompatible avec un seuil fixé, le dispositif de surveillance déclare une panne en émettant un signal d'alarme à destination des processeurs.

Dans le cas contraire, les processeurs utilisent les impulsions d'horloge de la même horloge temps réel pour synchroniser leurs traitements.

Cette surveillance permet de répondre à l'objectif de sécurité, mais pas à celui de disponibilité : dans le cas d'une défaillance de l'horloge temps réel commune, la panne est signalée, mais les processeurs se trouvent bloqués.

L'invention a donc plus particulièrement pour but de supprimer ces inconvénients.

Elle propose à cet effet un dispositif de synchronisation permettant de synchroniser plusieurs processeurs indépendants et faisant intervenir, pour chaque processeur, un circuit de synchronisation comprenant :
- d'une part, une horloge temps réel qui délivre un signal de synchronisation interne pouvant passer, à la suite d'une commande, d'un premier état, par exemple actif, à un second état, par exemple inactif, le signal retournant ensuite au premier état à l'issue d'une période correspondant sensiblement à la période d'un cycle temps réel, et
- d'autre part, un comparateur qui reçoit, outre ledit signal de synchronisation (interne), les signaux de synchronisation (externes) émanant des horloges temps réel de tous les autres circuits de synchronisation, ce comparateur étant conçu de manière à transmettre au processeur qui lui est associé, une impulsion de synchronisation engendrée au cours d'une séquence comprenant :
   - la comparaison du signal de synchronisation interne avec les signaux de synchronisation externes, de manière à détecter le passage au premier état du signal de synchronisation le plus en retard,
   - la transmission au processeur d'une impulsion de synchronisation au bout d'un laps de temps déterminé à la suite dudit passage, puis
   - la transmission à l'horloge temps réel d'un signal de commande faisant passer le signal de synchronisation interne de son premier état à son second état.

Un avantage du dispositif de synchronisation précédemment décrit consiste en ce que le recalage des signaux de synchronisation effectué à chaque cycle permet de s'affranchir des effets cumulatifs pouvant résulter de dérives lentes se produisant au niveau des horloges temps réel. En effet, dans ce cas, un léger décalage tolérable au premier cycle, pourrait se traduire par un gros écart inadmissible au bout d'un certain nombre de cycles.

Selon une autre caractéristique de l'invention, le susdit comparateur peut en outre être conçu de manière à transmettre au processeur qui lui est associé, un signal d'alarme en cas d'une anomalie détectée sur les signaux de synchronisation. Tel est le cas, par exemple, lorsque le décalage entre le retour à l'état actif du signal de synchronisation interne et celui d'au moins l'un des signaux de synchronisation externes, dépasse un seuil prédéterminé. Dans ce cas, le comparateur émet en outre forfaitairement une impulsion de synchronisation permettant au processeur qui lui est associé de fonctionner indépendamment des autres processeurs.

Grâce à une telle disposition, on évite le blocage d'un processeur à la suite de la défaillance de l'horloge temps réel associée à un autre processeur.

Un mode d'exécution de l'invention sera décrit ci-après, à titre d'exemple non limitatif, avec référence aux dessins annexés dans lesquels :
La figure 1 est un schéma synoptique d'un dispositif de synchronisation selon l'invention ;
La figure 2 est un diagramme temporel illustrant le mécanisme de synchronisation des deux premiers circuits de synchronisation utilisés dans le dispositif représenté figure 1, en fonctionnement opérationnel ;
La figure 3 est un diagramme similaire à celui représenté figure 2, mais illustrant le principe de l'activation forfaitaire qui garantit l'autonomie de fonctionnement des processeurs en cas de panne ;
La figure 4 est un diagramme temporel illustrant le mécanisme de l'émission d'un signal d'alarme.

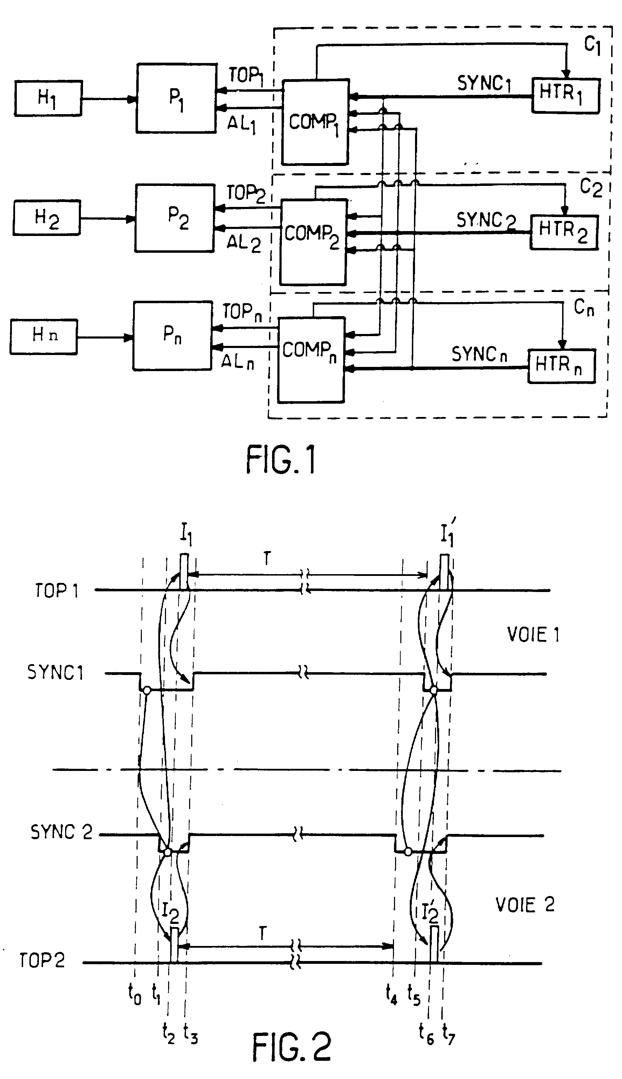

Dans l'exemple représenté sur la figure 1, le dispositif de synchronisation selon l'invention s'applique à trois processeurs indépendants P₁, P₂, Pₙ respectivement associés à trois horloges internes H₁, H₂, Hₙ (pouvant définir des cycles élémentaires différents).

Il fait intervenir, pour chacun de ces processeurs P₁, P₂, Pₙ, un circuit de synchronisation C₁, C₂, Cₙ permettant de délivrer à ce processeur un signal de synchronisation TOP₁, TOP₂, TOPₙ et, éventuellement, un signal d'alarme AL₁, AL₂, ALₙ. Chaque circuit de synchronisation (C₁, C₂, Cₙ) comprend une horloge temps réel qui délivre un signal de synchronisation interne (SYNC₁, SYNC₂, SYNCₙ) pouvant passer, à la suite d'une commande, d'un état actif à un état inactif puis repasser ensuite à l'état actif à l'issue d'une période correspondant sensiblement à la période T d'un cycle temps réel.

Ce signal de synchronisation interne (SYNC₁, SYNC₂, SYNCₙ) est appliqué à l'une des entrées d'un comparateur COMP₁, COMP₂, COMPₙ qui reçoit sur ses autres entrées les signaux de synchronisation (externes) émanant des horloges temps réel des autres circuits de synchronisation.

Comme précédemment mentionné, chaque comparateur, par exemple le comparateur COMP₁ compare les signaux de synchronisation SYNC₁, SYNC₂, SYNCₙ de manière à détecter le passage à l'état actif du signal de synchronisation le plus en retard. Au bout d'un premier laps de temps prédéterminé, à compter de cette détection, il transmet au processeur P₁ qui lui est associé, une impulsion de synchronisation TOP₁ puis, au bout d'un deuxième laps de temps prédéterminé, il transmet à l'horloge temps réel HTR₁ un signal de commande qui provoque le passage du signal de synchronisation SYNC₁ à l'état inactif.

Du fait qu'ils se basent sur la même référence temporelle (passage à l'état inactif du signal de synchronisation le plus en retard) les comparateurs agissent en parfait synchronisme pour émettre les impulsions de synchronisation et les signaux de commande.

En conséquence, à chaque cycle de fonctionnement, on obtient un recalage des signaux délivrés par les horloges temps réel.

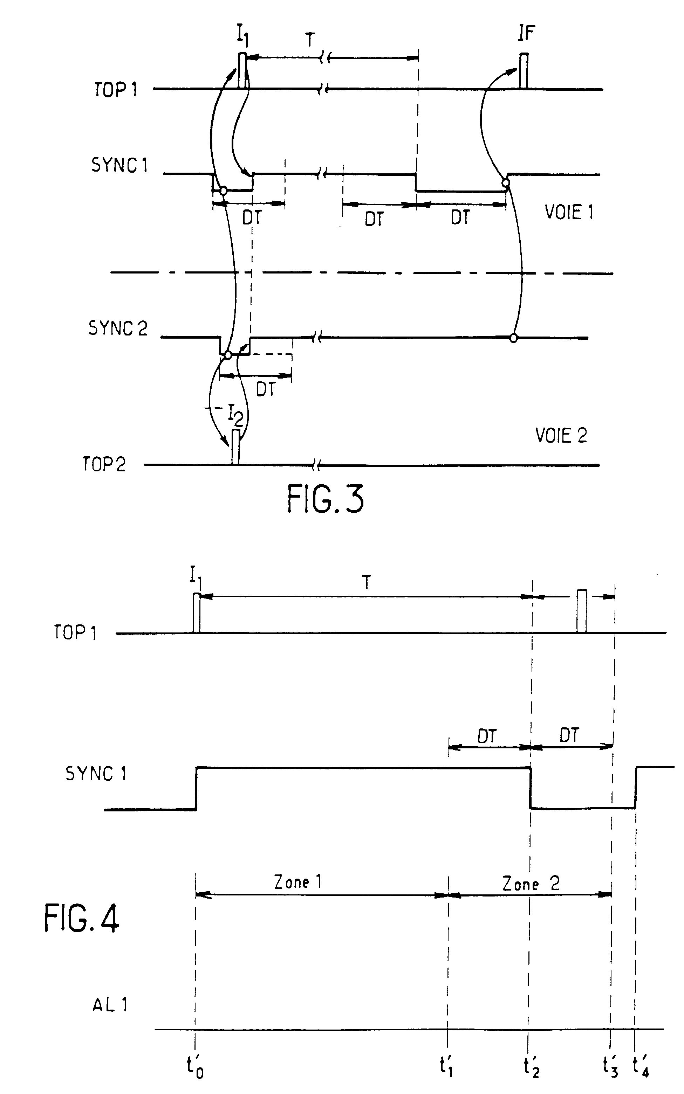

Ce mode de fonctionnement est décrit plus en détail ci-après , en référence aux figures 2 et 3 qui, pour plus de clarté, ne concernent que les dispositifs de synchronisation associés aux processeurs P₁ et P₂.

Sur ces figures, on a représenté, en correspondance temporelle, le signal de synchronisation TOP₁ émis par le comparateur COMP₁, le signal SYNC₁ émis par l'horloge temps réel HTR₁, le signal SYNC₂ émis par l'horloge temps réel HTR₂ et le signal de synchronisation TOP₂ émis par le comparateur COMP₂.

Dans l'exemple illustré figure 2, à l'instant t₀, le signal SYNC₁ termine sa période d'inactivité, en avance sur le signal SYNC₂ (qui termine la sienne à l'instant t₁).

Le comparateur COMP₁ attend donc que la période d'inactivité du signal SYNC₂ soit écoulée, pour émettre en synchronisme avec le comparateur COMP₂ une impulsion de synchronisation I₁, I₂.

Les comparateurs COMP₁ et COMP₂ agissent ensuite sur leurs horloges temps réel respectives HTR₁, HTR₂, pour enclencher, au temps t₃, une nouvelle période d'inactivité des signaux de synchronisation SYNC₁, SYNC₂.

A l'instant t₄, le signal SYNC₂ termine sa période d'inactivité, en avance sur le signal SYNC₁ (qui termine la sienne à l'instant t₅).

Le comparateur COMP₂ attend donc l'expiration du signal SYNC₁ (instant t₅) pour émettre, en synchronisme avec le comparateur COMP₁, une nouvelle impulsion de synchronisation I'₁, I'₂.

Ces comparateurs COMP₁, COMP₂ agissent alors sur leurs horloges respectives pour relancer, en synchronisme (à l'instant t₇) une nouvelle période d'activation des signaux SYNC₁ et SYNC₂.

Dans l'exemple représenté sur la figure 3, entre l'instant t₀ et l'instant t₃, le fonctionnement est similaire à celui illustré sur la figure 2. Toutefois, dans ce cas, le fonctionnement de l'horloge temps réel HTR₂ est défectueux : le signal SYNC₂ qui, à l'instant t₃, était passé à l'état inactif, en synchronisme avec le signal SYNC₁, demeure à l'état inactif.

Dans ce cas, au-delà d'une période de temps T + DT à compter de l'instant d'émission des impulsions I₁ et I₂, le comparateur COMP₁ génère forfaitairement une impulsion de synchronisation IF (la valeur DT est la tolérance utilisée sur l'allongement d'un cycle temps réel de valeur nominale T).

D'une façon plus générale, pour assurer une bonne autonomie des processeurs P₁, P₂, le comparateur COMP₁ engendrera forfaitairement une impulsion IF si le signal SYNC₂ n'est pas activé dans une fenêtre temporelle (T - DT, T + DT). L'émission de l'impulsion IF se produira alors à l'instant T + DT.

L'émission d'un signal d'alarme par un comparateur pour signaler au processeur l'occurrence d'un défaut de signalisation, se produit dans les deux cas suivants :
- absence d'activation du signal SYNC₂ dans la fenêtre (T - DT, T + DT),
- activation du signal SYNC₂ hors de cette fenêtre.

Ces conditions se trouvent illustrées dans le chronogramme de la figure 4 dans lequel on a représenté le signal de synchronisation émis par le comparateur COMP₁, le signal d'horloge SYNC₁ émis par l'horloge temps réel HTR₁ et un tableau d'activation du signal d'alarme AL₁.

L'impulsion de synchronisation I₁, émise à l'instant t'₀ marque le début d'une période temps réel T se terminant au moment t'₂ du retour du signal SYNC₁ à l'état actif.

Les instants t'₁ et t'₃ indiquent les limites de la fenêtre T + DT, T - DT dans laquelle une nouvelle impulsion de synchronisation doit être engendrée par le comparateur COMP₁.

Le tableau d'activation de l'alarme émise par le comparateur 1 comprend deux zones, à savoir :
- une première zone allant de l'instant t'₀ à l'instant t'₁, et à l'intérieur de laquelle l'activation du signal SYNC₂ provoque l'émission d'une alarme, et
- une deuxième zone allant de l'instant t'₁ à l'instant t'₃ et à l'intérieur de laquelle l'absence d'activation du signal SYNC₂ provoque l'émission d'une alarme.

Il convient de noter que, pour permettre la première synchronisation à l'initialisation du processus, la fenêtre autorisée est élargie jusqu'à l'obtention d'un délai compatible avec les écarts de mise en route des deux processeurs.

## Revendications

1. Dispositif de synchronisation permettant de synchroniser plusieurs processeurs indépendants,
caractérisé en ce qu'il fait intervenir, pour chaque processeur (P₁, P₂, Pₙ), un circuit de synchronisation comprenant :
- d'une part, une horloge temps réel (HTR₁, HTR₂, HTRₙ), qui délivre un signal de synchronisation interne (SYNC₁, SYNC₂, SYNCₙ) pouvant passer, à la suite d'une commande, d'un premier état à un second état, le signal retournant ensuite au premier état à l'issue d'une période correspondant sensiblement à la période (T) d'un cycle temps réel, et
- d'autre part, un comparateur (COMP₁, COMP₂, COMPₙ) qui reçoit, outre ledit signal de synchronisation (interne), les signaux de synchronisation (externes) émanant des horloges temps réel de tous les autres circuits de synchronisation, ce comparateur (COMP₁, COMP₂, COMPₙ) étant conçu de manière à transmettre au processeur (P₁, P₂, Pₙ), qui lui est associé, une impulsion de synchronisation engendrée au cours d'une séquence comprenant :
- la comparaison du signal de synchronisation interne avec les signaux de synchronisation externes, de manière à détecter le passage au premier état du signal de synchronisation le plus en retard,
- la transmission au processeur (P₁, P₂, Pₙ) d'une impulsion de synchronisation au bout d'un laps de temps déterminé à la suite dudit passage, puis
- la transmission à l'horloge temps réel (HTR₁, HTR₂, HTRₙ) d'un signal de commande faisant passer le signal de synchronisation interne de son premier état à son second état.

2. Dispositif selon la revendication 1,
caractérisé en ce que le susdit premier état est un état actif, tandis que le second état est un état inactif.

3. Dispositif selon l'une des revendications 1 et 2,
caractérisé en ce que le susdit comparateur (COMP₁, COMP₂, COMPₙ) émet forfaitairement au processeur (P₁, P₂, Pₙ) qui lui est associé, une impulsion de synchronisation (IF), lorsque le décalage entre le retour à l'état actif du signal de synchronisation interne et celui d'au moins l'un des signaux de synchronisation externes, dépasse un seuil prédéterminé.

4. Dispositif selon l'une des revendications précédentes,
caractérisé en ce que le susdit comparateur engendre forfaitairement une impulsion de synchronisation (IF), si l'un au moins des signaux de synchronisation externes n'est pas activé dans une fenêtre temporelle (T - DT, T + DT), (T) étant la valeur nominale d'un cycle temps réel et la valeur (DT) étant la tolérance utilisée sur l'allongement de ce cycle.

5. Dispositif selon l'une des revendications précédentes,
caractérisé en ce que le susdit comparateur (COMP₁, COMP₂, COMPₙ) est conçu de manière à transmettre au processeur (P₁, P₂, Pₙ) qui lui est associé, un signal d'alarme en cas d'une anomalie détectée sur les signaux de synchronisation (SYNC₁, SYNC₂, SYNCₙ).

6. Dispositif selon l'une des revendications précédentes,
caractérisé en ce que l'émission du signal d'alarme se produit à la suite :
- de l'absence d'activation d'au moins un signal de synchronisation externe dans la fenêtre (T - DT, T + DT),
- de l'activation d'au moins un signal de synchronisation externe hors de ladite fenêtre.

## Patentansprüche

1. Synchronisationsvorrichtung zur Synchronisation mehrerer unabhängiger Prozessoren, dadurch gekennzeichnet, daß sie für jeden Prozessor (P₁, P₂, Pₙ) eine Zeitschaltung einsetzt, umfassend:
- einerseits eine Echtzeituhr (HTR₁, HTR₂, HTRₙ), die ein internes Synchronisationssignal (SYNC₁, SYNC₂, SYNCₙ) sendet, das nach einem entsprechenden Befehl von einem ersten in einen zweiten Zustand übergehen kann, wobei das Signal anschließend, nach Ablauf einer bestimmten Zeitspanne, die im wesentlichen der Zeitspanne (T) eines Echtzeitzyklus entspricht, wieder in den ersten Zustand zurückkehrt, und
- andererseits einen Komparator (COMP₁, COMP₂, COMPₙ), der neben dem erwähnten (internen) Synchronisationssignal (externe) Synchronisationssignale empfängt, die von den Echtzeituhren aller anderen Zeitschaltungen stammen, wobei der Komparator (COMP₁, COMP₂, COMPₙ) so ausgelegt ist, daß er an den ihm zugewiesenen Prozessor (P₁, P₂, Pₙ) einen Synchronisationsimpuls senden kann, der im Laufe einer Sequenz erzeugt wurde, die umfaßt:
- den Vergleich des internen Synchronisationssignals mit den externen Synchronisationssignalen zur Bestimmung des Übergangs des spätesten Synchronisationssignals in den ersten Zustand,
- die Übertragung eines Synchronisationsimpulses an den Prozessor (P₁, P₂, Pₙ) nach Ablauf einer gewissen Zeitspanne, die ab dem erwähnten Übergang bestimmt wird, und anschließend
- die Übertragung eines Steuersignals, durch welches das interne Synchronisationssignal von seinem ersten Zustand in seinen zweiten Zustand übergeht, an die Echtzeituhr (HTR₁, HTR₂, HTRₙ).

2. Vorrichtung nach Anspruch 1, dadurch gekennzeichnet, daß der erwähnte erste Zustand ein aktiver Zustand ist, während der zweite Zustand ein inaktiver Zustand ist.

3. Vorrichtung nach einem der Ansprüche 1 und 2, dadurch gekennzeichnet, daß der erwähnte Komparator (COMP₁, COMP₂, COMPₙ) an den ihm zugewiesenen Prozessor (P₁, P₂, Pₙ) pauschal einen Synchronisationsimpuls (IF) sendet, wenn die Verschiebung zwischen der Rückkehr des internen Synchronisationssignals und wenigstens eines der externen Synchronisationssignale in den aktiven Zustand einen vorbestimmten Schwellenwert überschreitet.

4. Vorrichtung nach einem der vorhergehenden Ansprüche, dadurch gekennzeichnet, daß der erwähnte Komparator pauschal einen Synchronisationsimpuls (IF) erzeugt, wenn wenigstens eines der externen Synchronisationssignale innerhalb eines Zeitfensters (T - DT, T + DT) nicht aktiv ist, wobei (T) für den Nennwert eines Echtzeitzyklus und der Wert (DT) für die hinsichtlich der Verlängerung dieses Zyklus verwendete Toleranz steht.

5. Vorrichtung nach einem der vorhergehenden Ansprüche, dadurch gekennzeichnet, daß der erwähnte Komparator (COMP₁, COMP₂, COMPₙ) so ausgelegt ist, daß er an den ihm zugewiesenen Prozessor (P₁, P₂, Pₙ) ein Alarmsignal sendet, wenn eine Anomalie bezüglich der Synchronisationssignale (SYNC₁, SYNC₂, SYNCₙ) festgestellt wurde.

6. Vorrichtung nach einem der vorhergehenden Ansprüche, dadurch gekennzeichnet, daß die Aussendung des Alarmsignals erfolgt, weil:
- innerhalb des Fensters (T - DT, T + DT) nicht wenigstens eines der externen Synchronisationssignale aktiviert wurde,
- wenigstens ein externes Synchronisationssignal außerhalb des erwähnten Fensters aktiviert wurde.

## Claims

1. Synchronisation device enabling several independent processors to be synchronised, characterised in that it uses, for each processor (P₁, P₂, Pₙ), a synchronising circuit comprising:
- on the one hand, a real-time clock (HTR₁, HTR₂, HTRₙ) which issues an internal synchronisation signal (SYNC₁, SYNC₂, SYNCₙ) which can change, subsequent to an order, from a first state to a second state, the signal then returning to the first state after a period corresponding substantially to the period (T) of a real-time cycle, and
- on the other hand, a comparator (COMP₁, COMP₂, COMPₙ) which receives, in addition to said (internal) synchronisation signal, the (external) synchronisation signals coming from the real-time clocks of all the other synchronising circuits, this comparator (COMP₁, COMP₂, COMPₙ) being designed so as to transmit, to the processor (P₁, P₂, Pₙ) associated therewith, a synchronisation pulse generated in the course of a sequence comprising:
· comparison of the internal synchronisation signal with the external synchronisation signals in order to detect the switchover to the first state of the synchronisation signal most delayed,
· transmission to the processor (P₁, P₂, Pₙ) of a synchronisation pulse after a predetermined lapse of time subsequent to said switchover, and then
· transmission to the real-time clock (HTR₁, HTR₂, HTRₙ) of a control signal switching the internal synchronisation signal from its first state to its second state.

2. Device as claimed in claim 1, characterised in that said first state is an active state, whereas the second state is an inactive state.

3. Device as claimed in any one of claims 1 and 2, characterised in that said comparator (COMP₁, COMP₂, COMPₙ) issues to the processor (P₁, P₂, Pₙ) associated therewith, a conventional synchronisation pulse (IF) when the gap between the return to the active state of the internal synchronisation signal and that of at least one of the external synchronisation signals exceeds a predetermined threshold.

4. Device as claimed in any one of the previous claims, characterised in that said comparator generates a conventional synchronisation pulse (IF) if at least one of the external synchronisation pulses is not activated in a time window (T - DT, T + DT), (T) being the nominal value of a real-time cycle and the value (DT) being the tolerance used with regard to the extension of this cycle.

5. Device as claimed in any one of the previous claims, characterised in that said comparator (COMP₁, COMP₂, COMPₙ) is designed so as to transmit, to the processor (P₁, P₂, Pₙ) associated therewith, an alarm signal in the event of any problem detected by means of the synchronisation signals (SYNC₁, SYNC₂, SYNCₙ).

6. Device as claimed in any one of the previous claims, characterised in that the alarm signal is produced subsequent to:
- absence of activation of at least one external synchronisation signal in the window (T - DT, T + DT),
- activation of at least one external synchronisation signal outside of said window.
